# EUROPÄISCHE PATENTSCHRIFT

(11) **EP 1 446 452 B1**
(45) Veröffentlichungstag und Bekanntmachung des Hinweises auf die Patenterteilung: **20.12.2006**
(21) Anmeldenummer: 02783027.2
(22) Anmeldetag: 29.10.2002
(51) Int. Cl.: C08L 63/00, C08L 81/06

(54) **MODIFIZIERTE EPOXIDHARZE**
MODIFIED EPOXY RESINS
RESINES EPOXY MODIFIEES

(30) Priorität: 12.11.2001 DE 10155157
(43) Veröffentlichungstag der Anmeldung: 18.08.2004
(73) Patentinhaber: BASF Aktiengesellschaft, 67056 Ludwigshafen (DE)
(72) Erfinder: ALIG, Ingo, 64331 Weiterstadt (DE); HOLST, Marco, 70197 Stuttgart (DE); WEBER, Martin, 67487 Maikammer (DE)
(86) Internationale Anmeldenummer: PCT/EP2002/012045
(87) Internationale Veröffentlichungsnummer: WO 2003/042298

(56) Entgegenhaltungen:
- EP-A- 0 373 440
- EP-A- 0 506 611
- US-A- 5 034 473

## Beschreibung

Die vorliegende Erfindung betrifft Formmassen, die
A) 40 bis 99 Gew.-% mindestens eines Epoxidharzes,
B) 1 bis 60 Gew.-% mindestens eines Polyarylenethersulfons enthaltend Seiten- oder Endgruppen ausgewählt aus der Gruppe der Carboxyl- und Anhydridgruppen,
C) gegebenenfalls mindestens ein Polyarylenethersulfon, enthaltend im wesentlichen keine Seiten- oder Endgruppen ausgewählt aus der Gruppe der Carboxyl- und Anhydridgruppen,
D) gegebenenfalls mindestens einen Füllstoff,
E) 0 bis 40 Gew.-% eines oder mehrerer unterschiedlicher Zusatzstoffe,
enthalten, wobei die Gewichtsprozente der Komponenten A bis E zusammen 100% ergeben.

Darüber hinaus betrifft die vorliegende Erfindung Verfahren zur Herstellung dieser Formmassen, die Verwendung dieser Formmassen zur Herstellung von Formteilen sowie Formteile aus den erfindungsgemäßen Formmassen.

Formmassen auf Basis von Epoxidharzen sind hinlänglich bekannt und finden als duroplastische Materialien einen weitverbreiteten Einsatz, beispielsweise in der Elektrotechnik, Automobiltechnik oder auch im Bauwesen.

Epoxidharzsysteme zeichnen sich in der Regel durch sehr hohe Härte und Steifigkeit sowie durch gute Temperatur-, Chemikalien-, Witterungs- und Wärmeformbeständigkeit aus. Nachteilig an diesen Systemen ist jedoch oftmals ein während der Härtung auftetender Volumenschwund sowie mangelnde Zähigkeit und Dehnbarkeit der gehärteten Produkte.

Zur Reduktion dieser nachteiligen Eigenschaften sind eine Vielzahl von Zusatzstoffen für Epoxidharzsysteme beschrieben worden. So offenbart beispielsweise EP-A2 392 348 Epoxidharzsysteme enthaltend ein Epoxidharz, einen Härter und teilchenförmig vorliegende Thermoplaste, unter anderem Polysulfone, mit verbesserter Zähigkeit, insbesondere verbesserter Schlagzähigkeit.

EP-A2 373 440 beschreibt zähmodifizierte Epoxidharzmischungen aus einer aromatischen Epoxidverbindung, einem Aminhärter, einem reaktive Gruppen enthaltenden aromatischen thermoplastischen Oligomeren, vorzugsweise einem aminterminiertem Polysulfon oder Polyethersulfon, sowie einem hochmolekularen Emulgator, die eine von der Härtungstemperatur und von der Art des Heizzyklus unabhängige Morphologie aufweisen, so daß beim Härten Formteile mit gleichmäßig guten mechanischen Eigenschaften erhalten und Produktschwankungen vermieden werden.

Aufgrund der Unverträglichkeit zwischen dem Epoxidharz und Polysulfon bzw. Polyethersulfon sind die gemäß EP-A2 392 348 oder EP-A2 373 440 erhältlichen Epoxidharzsysteme jedoch opak und daher für viele Anwendungen schlecht geeignet.

Der vorliegendenden Erfindung lag daher die Aufgabe zugrunde, mit Polyarylenethersulfonen modifizierte Epoxidharze bereitzustellen, die bei vergleichbar guten oder verbesserten mechanischen Eigenschaften, beispielsweise vergleichbar guter oder verbesserter Schlagzähigkeit, eine gegenüber den bekannten Epoxidharzsystemen verbesserte Transparenz aufweisen.

Diese Aufgabe wird von den eingangs definierten Formmassen, die im folgenden näher beschrieben sind, erfüllt.

### Komponente A

Die erfindungsgemäßen Formmassen enthalten die Komponente A in Mengen von 40 bis 99 Gew.-%, insbesondere von 55 bis 95 Gew.-%, und besonders bevorzugt von 60 bis 90 Gew.-% bezogen auf das Gesamtgewicht von A bis E.

Als Komponente A der erfindungsgemäßen Formmassen sind prinzipiell alle Epoxidharze geeignet. Die Epoxidharze sowie die Verfahren zur Herstellung der Epoxidharze sind dem Fachmann bekannt (s. beispielsweise F. Lohse, W. Seitz in E. Müller (Hrsg.) Houben-Weyl, Methoden der organischen Chemie, Makromolekulare Stoffe III, Georg Thieme Verlag, Stuttgart 1961, oder.G. Becker, D. Braun (Hrsg.) Duroplaste, Kunststoff-Handbuch 10, Carl Hanser Verlag, München, Wien 1988). Üblicherweise sind Epoxidharze aus in der Regel organischen, niedermolekularen oder oligomeren Epoxidverbindungen a1) mit mehr als einer Epoxid-Gruppe pro Molekül durch Polyadditionsreaktion mit einem oder mehreren geeigneten Härtern a2) und/oder Härtungsbeschleunigern a3) erhältlich, die Epoxidharze sind jedoch auch ohne Härter und/oder Härtungsbeschleuniger durch Polymerisation der Epoxidverbindungen erhältlich. Der Begriff "Härtungsbeschleuniger" erfaßt im Sinne der vorliegenden Erfindung alle Stoffe, die gezielt zur Beeinflußung des Härtungsprozesses, beispielsweise der Beschleunigung des Härtungsprozesses, einsetzbar sind.

Besonders geeignete, dem Fachmann bekannte Epoxidverbindungen a1) basieren auf Umsetzungsprodukten von mehrfach funktionellen Alkoholen, Phenolen, cycloaliphatischen Carbonsäuren, aromatischen Aminen oder Aminophenolen mit Epichlorhydrin, sowie cycloaliphatische Epoxide und cycloaliphatische Epoxidester. Es können auch Mischungen von verschiedenen Epoxidverbindungen zum Einsatz kommen. Bevorzugt sind Bisphenol-A-Diglycidylether, Bisphenol-F-Diglycidylether, Resorcin-Diglycidylether und Triglycidylether von Paraaminophenolen, sowie Mischungen dieser Epoxidverbindungen. Weitere besonders geeignete, dem Fachmann bekannte Epoxidverbindungen a1) sind Umsetzungsprodukte von Epichlorhydrin mit o-Kresol bzw. Phenol-Novolaken. Auf Bisphenol A basierende Epoxidverbindungen a1) sind ganz besonders bevorzugt. Die Epoxidverbindungen a1) haben eine Glastemperatur von vorzugsweise unter 20°C. Ihr mittleres Molekulargewicht liegt in der Regel unter 2 000 g/mol, vorzugsweise unter 1 500 g/mol.

Als Härter a2) können beispielsweise Säureanhydride, phenolhaltige Verbindungen, Amine oder andere dem Fachmann als Härter bekannte Stoffe eingesetzt werden. Geeignete Härter a2) sind beispielsweise beschrieben in EP-A2 373 440.

Als Härtungsbeschleuniger a3) können beispielsweise tert.-Amine, Organophosphine, Lewisbasen oder -säuren oder andere dem Fachmann als Härtungsbeschleuniger bekannte Stoffe eingesetzt werden.

Weitere geeignete Härter a2) und Härtungsbeschleuniger a3) sind beispielsweise beschrieben in H. Lee, K. Neville Handbook of Epoxy Resins Mc Graw-Hill Book Company New York San Francisco Toronto 1967.

### Komponente C

Die erfindungsgemäßen Formmassen enthalten die Komponente C in Mengen insbesondere von 0 bis 55 Gew.-%, und besonders bevorzugt von 0 bis 50 Gew.-% bezogen auf das Gesamtgewicht von A bis E.

Als Komponente C wird erfindungsgemäß ein Polyarylenethersulfon eingesetzt, welches im wesentlichen keine Seiten- oder Endgruppen ausgewählt aus der Gruppe der Carboxyl- und Anhydridgruppen enthält. Bevorzugte Polyarylenethersulfone C enthalten 99 bis 100 mol-%, bevorzugt 99,5 bis 100 mol-%, Seiten- oder Endgruppen, die keine Carboxyl- oder Anhydridgruppen sind, beispielsweise Chlorid- oder Methoxyendgruppen, wobei sich diese mol-%-Angaben auf die Gesamtheit aller Seiten- oder Endgruppen beziehen. Polyarylenethersulfone C sind bekannt und werden beispielsweise von der Fa. Solvay unter den Marken Udel^{®} oder Radel^{®}, und von BASF Aktiengesellschaft unter den Marken Ultrason^{®} S oder Ultrason^{®} E vertrieben. Es können auch Mischungen aus zwei oder mehreren unterschiedlichen Polyarylenethersulfonen als Komponente C eingesetzt werden.

Die Arylengruppen der Polyarylenethersulfone C können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁- bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor.

Des weiteren sind Substituenten bevorzugt, die durch Reaktion der Polyarylenethersulfone mit einer reaktiven Verbindung, die neben einer C-C-Doppel- oder -Dreifachbindung eine bzw. mehrere Carbonyl-, Amino-, Hydroxyl-, Epoxi-, Oxazolin-, Urethan-, Harnstoff-, Lactam- oder Halogenbenzylgruppen enthält, erhältlich sind. Die Arylengruppen der Polyarylenethersulfone können neben -SO₂-, z.B. über -O-, -S-, -SO-, -CO-, -N=N-, -COO-, einen Alkylenrest, der gewünschtenfalls substituiert sein kann, oder eine chemische Bindung miteinander verknüpft sein.

Bevorzugte erfindungsgemäß brauchbare Polyarylenethersulfone (Komponente C) sind aufgebaut aus wiederkehrenden Einheiten der Formel I 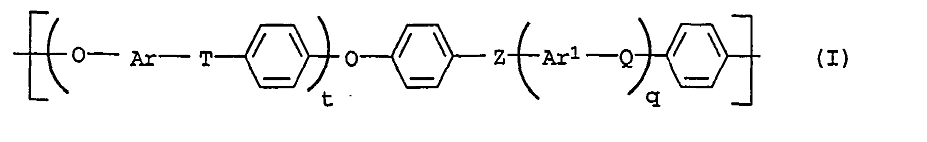 worin
- t und q: unabhängig voneinander für 0, 1, 2 oder 3 stehen,
- Q, T, und Z: unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d}-, bedeuten, wobei
R^{a} und R^{b} unabhängig voneinander jeweils für ein Wasserstoff-atom oder eine C₁-C₁₂-Alkylgruppe stehen und
R^{c} und R^{d} unabhängig voneinander jeweils für ein Wasserstoff-atom oder eine C₁-C₁₂-Alkyl-, C₁-C₁₂-Alkoxy- oder C₆-C₁₈-Aryl-gruppe stehen, wobei R^{c} und R^{d}, wenn sie für eine Alkyl-, Alkoxy- oder Arylgruppe stehen, unabhängig voneinander mit Fluor- und/oder Chloratomen substituiert sein können oder wobei R^{c} und R^{d} zusammen mit dem C-Atom an das sie gebunden sind, eine C₃-C₁₂-Cycloalkylgruppe bilden können, die mit einer oder mehreren C₁-C₆-Alkylgruppen substituiert sein kann, mit der Maßgabe, daß mindestens eine der Gruppen T, Q und Z für -SO₂- steht und, wenn t und q für 0 stehen, Z für -SO₂-steht,
- Ar und Ar¹: unabhängig voneinander jeweils für eine C₆-C₁₈-Arylen-gruppe steht, wobei diese mit C₁-C₁₂-Alkyl-, C₆-C₁₈-Aryl-, C₁-C₁₂-Alkoxygruppen oder Halogenatomen substituiert sein kann.

Es können auch verschiedene Einheiten der Formel I statistisch oder in Blöcken verteilt im Polyarylenethersulfon vorliegen.

Bevorzugt sind die Polyarylenethersulfone C linear. Die Polyarylenethersulfone C können aber auch kettenverzweigende Einheiten enthalten, die durch den Einbau von Verbindungen mit drei oder mehr als drei funktionellen Gruppen, die unter den Bedingungen der Polyarylenethersulfonsynthese substituierbar sind, gebildet werden.

Die Herstellung erfindungsgemäß brauchbarer Polyarylenether C, beispielsweise durch Kondensation aromatischer Bishalogenverbindungen und den Alkalidoppelsalzen aromatischer Bisphenole, kann beispielsweise in Anlehnung an GB 1 152 035 und US 4,870,153 erfolgen, worauf hiermit ausdrücklich Bezug genommen wird. Geeignete Verfahrensbedingungen zur Synthese von Polyarylenethersulfonen sind beispielsweise in EP-A- 0 113 112 und EP-A- 0 135 130 beschrieben. Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt. Beispiele für geeignete Polyarylenethersulfone C sind solche, mit mindestens einer der folgenden wiederkehrenden Struktureinheiten I₁ bis I₁₅:

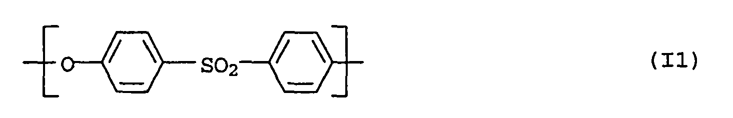

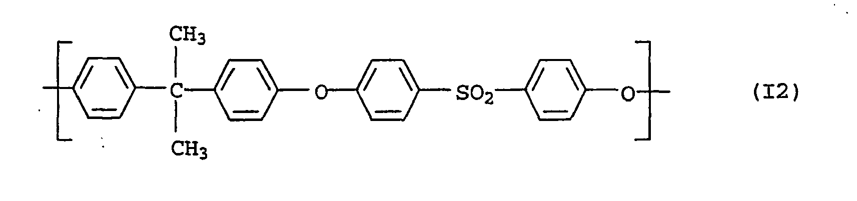

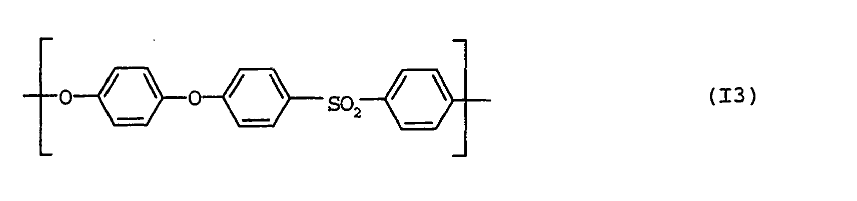

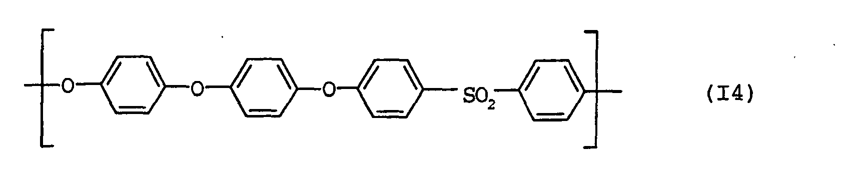

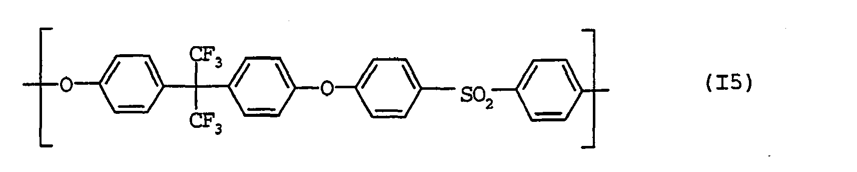

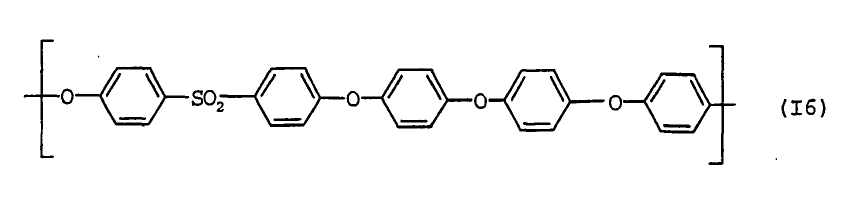

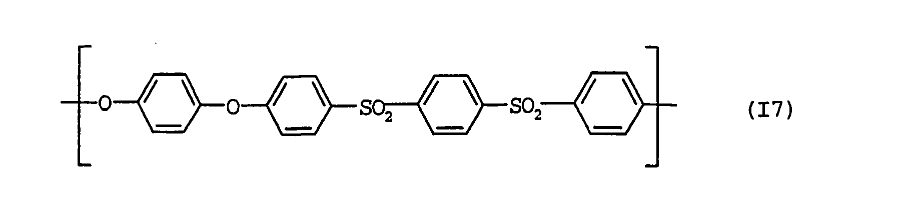

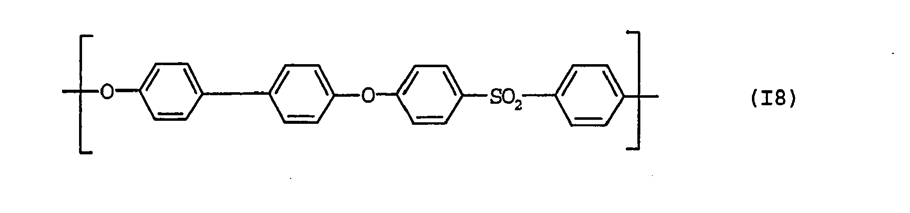

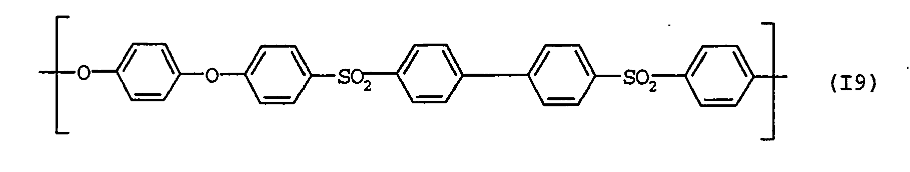

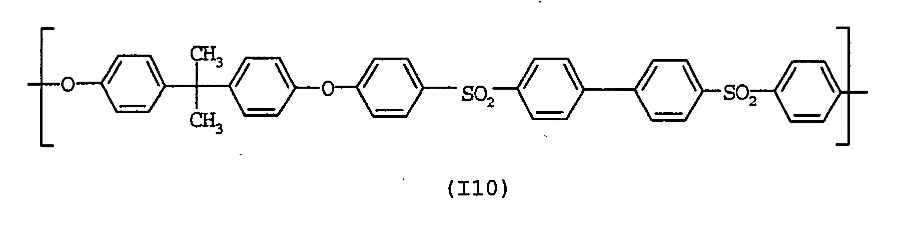

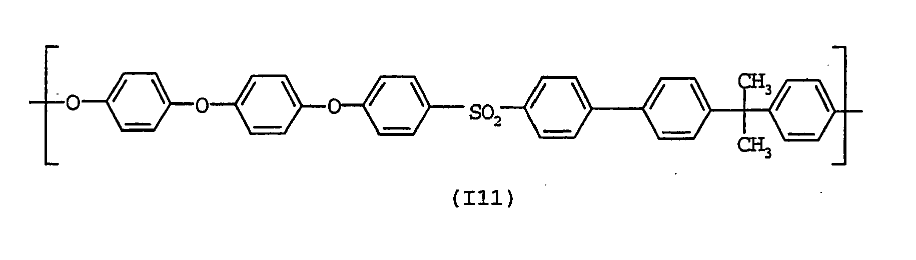

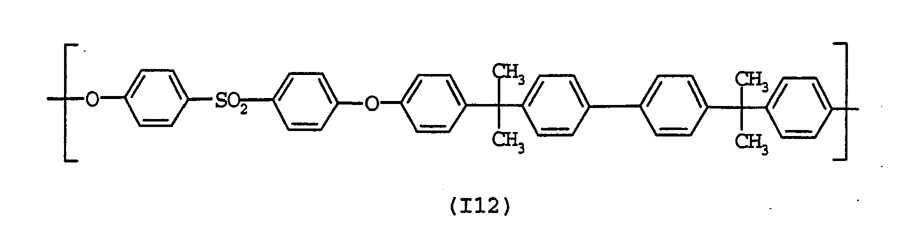

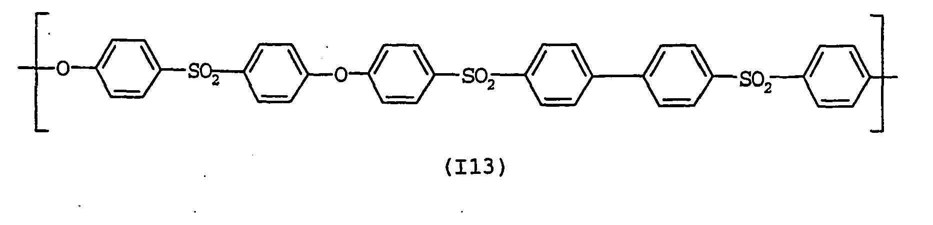

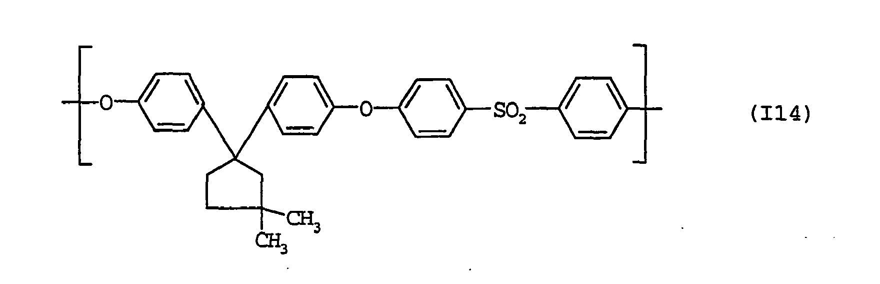

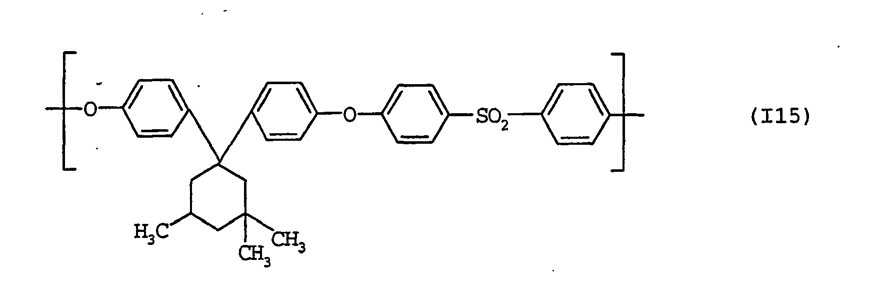

Als besonders bevorzugte Einheiten der Formel I sind Einheiten der Formeln I₁ und I₂ zu nennen, welche einzeln oder im Gemisch vorliegen können.

Je nach Synthesebedingungen können die Polyarylenethersulfone unterschiedliche funktionale Gruppen aufweisen. Diese funktionalen Gruppen können an Atome der Polymerkette gebunden sein oder als Endgruppen der Polymerkette vorliegen.

Zu diesen funktionalen Gruppen zählen Halogen-, insbesondere Chlor-, Alkoxy-, vor allem Methoxy- oder Ethoxy-, Aryloxy-, bevorzugt Phenoxy oder Benzyloxygruppen. Als weitere Beispiele für solche funktionale Gruppen sind Hydroxy-, Amino-, oder Epoxygruppen zu nennen. Darunter sind Polyarylenethersulfone mit Amino- oder Epoxyendgruppen oder deren Mischungen besonders bevorzugt.

Die Herstellung von Polyarylenethersulfonen C enthaltend funktionale Gruppen ist in DE-A1 199 61 040 sowie der darin genannten Literatur beschrieben.

Die Polyarylenethersulfone C können auch Co- oder Blockcopolymere sein, in denen Polyarylenethersulfonsegmente und Segmente von anderen thermoplastischen Polymeren, wie Polyestern, aromatischen Polycarbonaten, Polyestercarbonaten, Polysiloxanen, Polyimiden oder Polyetherimiden vorliegen. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenethersulfone in den Co- oder Blockcopolymeren beträgt im allgemeinen mindestens 10 Gew.-%. Der Gewichtsanteil der Polyarylenethersulfone kann bis zu 97 Gew.-% betragen. Bevorzugt werden Co- oder Blockcopolymere mit einem Gewichtsanteil an Polyarylenethersulfonen mit bis zu 90 Gew.-%. Besonders bevorzugt werden Co- oder Blockcopolymere mit 20 bis 80 Gew.-% Polyarylenethersulfonen.

Im allgemeinen weisen die Polyarylenethersulfone C mittlere Molekulargewichte Mₙ (Zahlenmittel) im Bereich von 3 000 bis 60 000 g/mol und relative Viskositäten von 0,15 bis 0,95 dl/g auf. Die relativen Viskositäten werden je nach Löslichkeit der Polyarylenethersulfone entweder in 1 gew.-%iger N-Methylpyrrolidon-Lösung, in Mischungen aus Phenol und Dichlorbenzol oder in 96%iger Schwefelsäure bei jeweils 20°C bzw. 25°C gemessen.

### Komponente B

Die erfindungsgemäßen Formmassen enthalten die Komponente B in Mengen von 1 bis 60 Gew.-%, insbesondere von 5 bis 45 Gew.-%, besonders bevorzugt von 10 bis 40 Gew.-%, bezogen auf das Gesamtgewicht von A bis E.

Als Komponente B wird erfindungsgemäß ein Polyarylenethersulfon eingesetzt, welches Seiten- oder Endgruppen ausgewählt aus der Gruppe der Carboxyl- und Anhydridgruppen enthält. Es können auch Mischungen aus zwei oder mehreren unterschiedlichen Polyarylenethersulfonen B eingesetzt werden. Solche Polyarylenethersulfone B sind dem Fachmann bekannt und nach dem Fachmann bekannten Verfahren herstellbar.

Die Polyarylenethersulfone B sind in analoger Weise aus den bei der Beschreibung der Komponente C bereits beschriebenen wiederkehrenden Einheiten aufgebaut, wobei aber im Unterschied zu Komponente C diese wiederkehrenden Einheiten zusätzlich 0,1 bis 15 Gew.-%, bevorzugt 0,2 bis 12,5 Gew.-%, besonders bevorzugt 0,25 bis 10 Gew.-%, bezogen auf das Gesamtgewicht von Komponente B, Seiten- oder Endgruppen ausgewählt aus der Gruppe der Carboxyl- und Anhydridgruppen enthalten.

Bevorzugte Polyarylenethersulfone B enthalten 0 bis 100 Mol-% wiederkehrende Einheiten I1 und 0 bis 100 Mol-% wiederkehrende Einheiten I2, wobei die Stoffmengenprozente wiederkehrender Einheiten der Formeln I1 und I2 zusammen 100 Mol-% ergeben und wobei die Einheiten I1 und I2 zusätzlich 0,1 bis 15 Gew.-%, bevorzugt 0,2 bis 12,5 Gew.-%, besonders bevorzugt 0,25 bis 10 Gew.-%, bezogen auf das Gesamtgewicht von Komponente B, Seiten- oder Endgruppen ausgewählt aus der Gruppe der Carboxyl- und Anhydridgruppen enthalten.

Besonders bevorzugt enthalten die Polyarylenethersulfone B Anhydridendgruppen.

Die Verfahren zur Herstellung der Polyarylenethersulfone B sind bekannt, und beispielsweise in analoger Weise wie die Verfahren zur Herstellung der Komponente C durchführbar, wobei jedoch in einer oder mehreren zusätzlichen oder abgewandelten Synthesestufen die Carboxyl- oder Anhydridgruppen eingeführt werden (s. beispielsweise DE 10149870.5 (Aktenzeichen)). Die Herstellung von Polyarylenethersulfonen B mit Anhydridendgruppen wird beispielsweise beschrieben in WO 97/04018, EP-A 613 916 oder C.L. Myers, ANTEC '92, 1992, 1, 1420. Die Herstellung von Polyarylenethersulfonen B mit seitenständigen Anhydridgruppen wird beispielsweise beschrieben in EP-A 513 488. Die Herstellung von Polyarylenethersulfonen B mit seitenständigen Carboxylgruppen wird beispielsweise beschrieben in WO 99/10432, I. W. Parsons et.al., Polymer 34, 2836 (1993) sowie T. Koch, H. Ritter, Macromol. Phys. 195, 1709 (1994).

Der Anteil an Carboxyl- oder Anhydridgruppen im Polyarylenethersulfon B kann durch die bekannten Methoden der allgemeinen organischen Analytik wie Titration, IR-, UV- und NMR-Spektroskopie bestimmt werden.

### Komponente D

Die erfindungsgemäßen Formmassen können optional dem Fachmann bekannte Verstärkungsmittel oder Füllstoffe enthalten. Vorzugsweise sind 0 bis 50, insbesondere 0 bis 40 Gew.-% faser- oder teilchenförmige Füllstoffe oder Verstärkungsstoffe oder deren Mischungen in den erfindungsgemäßen Formmassen enthalten. Die Mengenangaben beziehen sich jeweils auf die Gesamtmasse der Komponenten A bis E.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren sogenanntes Aspektverhältnis im Bereich von 1 bis 25, bevorzugt im Bereich von 2 bis 20 liegt, bestimmt am fertigen Produkt.

Die Teilchendurchmesser können dabei z.B. dadurch bestimmt werden, daß elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, die weniger als 40 µm beträgt kann auch mittels Siebanalyse gemessen werden. Das Aspektverhältnis ist das Verhältnis von Teilchendurchmesser zu Dicke (größter Ausdehnung zu kleinster Ausdehnung) .

Besonders bevorzugt werden als teilchenförmige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

### Komponente E

Die erfindungsgemäßen Formmassen können als Komponente E dem Fachmann bekannte Zusatzstoffe wie Verarbeitungshilfsmittel, Pigmente, Stabilisatoren, Flammschutzmittel, Kautschuke oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Deren Anteil beträgt erfindungsgemäß von 0 bis zu 40 Gew.-%, vorzugsweise von 0 bis zu 20 Gew.-%, insbesondere 0 bis 15 Gew.-%, bezogen auf das Gesamtgewicht der Komponenten A bis E.

Die erfindungsgemäßen Formmassen können nach an sich bekannten Verfahren hergestellt werden. Beispielsweise können in einem ersten Schritt die Komponenten B und gegebenenfalls C, D und/oder E mit zumindest teilweise noch nicht umgesetzten Komponenten a1) und gegebenenfalls a2) und/oder a3) gemischt werden, und in einem zweiten Schritt die vollständige Härtung der Komponenten a1) und gegebenenfalls a2) und/oder a3) durchgeführt werden. Die Reihenfolge der Mischung der Komponenten a1) und gegebenenfalls a2) und/oder a3) mit den Komponenten B und gegebenenfalls C, D und/oder E kann variiert werden, so können zwei oder gegebenenfalls drei oder mehr Komponenten vorgemischt werden, es können aber auch alle Komponenten gemeinsam gemischt werden.

Bevorzugt kann man zur Herstellung der erfindungsgemäßen Formmassen zunächst die Epoxidverbindung a1) mit der Komponente B und gegebenenfalls C, D und/oder E mischen und zur Vorreaktion bringen, wobei gegebenenfalls zunächst nur ein Teil der insgesamt einzusetzenden Epoxidverbindung a1) eingesetzt wird. Diese Vorreaktion wird vorzugsweise zwischen 80 und 140°C durchgeführt und dauert im allgemeinen 30 bis 360 min, kann aber beispielsweise auch 24 h dauern. Anschließend kann der Härter a2) und/oder der Härtungsbeschleuniger a3) und gegebenenfalls die restliche Epoxidverbindung a1) zugegeben werden und die Härtungsreaktion eingeleitet werden, die beispielsweise bei Temperaturen zwischen 100 und 240°C ablaufen kann.

Die erfindungsgemäßen Formmassen zeichnen sich dadurch aus, daß sie bei vergleichbar guten oder verbesserten mechanischen Eigenschaften, beispielsweise vergleichbar guter oder verbesserter Schlagzähigkeit, eine gegenüber den bekannten mit Polyarylenethersulfonen modifizierten Epoxidharzsystemen verbesserte Transparenz aufweisen.

Die erfindungsgemäßen Formmassen eignen sich zur Herstellung von Formteilen.

### Beispiele

### Untersuchungsmethoden:

Die Viskositätszahl (VZ [ml/g]) der Polyarylenethersulfone wurde in 1 gew.-% iger Lösung von N-Methylpyrrolidon bei 25 °C ermittelt.

Der Gehalt an Anhydridendgruppen der Polyarylenethersulfone [Gew.-% bezogen auf Gewicht der Komponente B] wurde mittels quantitativer IR-Absorptionsspektroskopie bestimmt. Dabei wurde eine Eichkurve verwendet, welche an Mischungen aus Phthalsäureanhydrid und Komponente C mit definierter Zusammensetzung bestimmt wurde. Es wurde jeweils die Peakhöhe der Absorption bei 1770 cm⁻¹ verwendet. Es wurden jeweils 10 gew.-%ige Lösungen der zu untersuchenden Proben in Dimethylformamid in Meßküvetten mit einer Schichtdicke von 76 µm unter Verwendung von Calciumfluoridfenstern eingesetzt.

Der Gehalt an sich von 4,4'-Bis-(hydroxyphenyl)-valeriansäure ableitenden Carboxylgruppen der Polyarylenethersulfone [Gew.-% bezogen auf Gewicht der Komponente B] wurde mittels ¹H-NMR bestimmt. Details dieser Methode sind bei I. W. Parsons et.al., Polymer 34, 2836 (1993), beschrieben.

Die Kerbschlagzähigkeit (aₖ [kJ/m²]) der Formmassen wurde nach EN ISO 180 mit einem Pendelschl-agwerk der Fa. Frank bestimmt. Die Kerbe hatte eine Tiefe von 2 mm und einen Radius von 2,5 mm. Die Geometrie der Proben betrug 80 mm × 10 mm × 2 mm.

Die Transparenz der Formmassen wurde visuell begutachtet.

### Herstellung der Formmassen

### Komponente a1)

Als Epoxidverbindung a1-1 wurde Bisphenol A Diglycidylether mit einem mittleren Molekukargewicht von 395 g/mol eingesetzt.

### Komponente a2)

Als Härter a2-1 wurde Hexahydrophthalsäureanhydrid eingesetzt.

### Komponente a3)

Als Härtungsbeschleuniger a3-1 wurde 2-Ethyl-4-methyl-imidazol eingesetzt.

### Komponente B

### Komponente B1 wurde durch nucleophile aromatische Polykondensation wie folgt hergestellt:

Unter Stickstoffatmosphäre wurden 262,76 g Dichlordiphenylsulfon und 228,28 g Bisphenol A in 1000 ml N-Methylpyrrolidon gelöst und mit 140,97 g wasserfreiem Kaliumcarbonat versetzt. Die Reaktionsmischung wurde unter ständigem Abdestillieren des Reaktionswassers und N-Methylpyrrolidon zunächst 1 h auf 180°C erhitzt und dann 7 h bei 190°C weiter umgesetzt. Nach dieser Zeit wurden 26,58 g 4-Fluorphthalsäureanhydrid und 9,3 g KF der Mischung zugesetzt und die Reaktion 15 Minuten bei 190°C weitergeführt. Die Lösung wird dann auf 130°C abgekühlt und nach Zugabe von 1000 ml N-Methylpyrrolidon filtriert, anschließend wurde das Polymere durch Fällung in Wasser isoliert. Nach 3-maliger Extraktion mit Wasser wurde das Polymere bei 160°C im Vakuum getrocknet. Der Gehalt an Phthalsäureanhydridendgruppen des Polyarylenethersulfons B1 betrug 2,3 Gew.-%, die Viskositätszahl betrug 22,2 ml/g.

### Komponente B2 wurde durch nucleophile aromatische Polykondensation wie folgt hergestellt:

Unter Stickstoffatmosphäre wurden 287,08 g Dichlordiphenylsulfon, 210,02 g Bisphenol A und 22,91 g 4,4'-Bis-(hydroxyphenyl)-valeriansäure in 1 1 N-Methylpyrrolidon gelöst und mit 141,00 g wasserfreiem Kaliumcarbonat versetzt. Die Reaktionsmischung wurde unter ständigem Abdestillieren des Reaktionswassers und N-Methylpyrrolidon zunächst auf 190°C erhitzt und dann 7 h bei 190°C weiter umgesetzt. Die Lösung wird dann mit 1 1 N-Methylpyrrolidon verdünnt und auf 120°C abgekühlt. Die erkaltete Lösung wird filtriert und das Polymere durch Fällung in Wasser isoliert. Nach 3-maliger Extraktion mit Wasser wurde das Polymer bei 160°C im Vakuum getrocknet. Der Gehalt an sich von 4,4'-Bis-(hydroxyphenyl)-valeriansäure ableitenden Einheiten betrug 4,3 Gew.-%, die Viskositätszahl des Polyarylenethersulfons B2 betrug 18,6 ml/g.

Als Komponente B3 (zum Vergleich) wurde ein Polyarylenethersulfon aufgebaut aus Einheiten I2 mit einer Viskositätszahl von 29,2 ml/g, gemessen in 1 %-iger NMP-Lösung bei 25°C, und einem Gehalt an OH-Endgruppen von 0,24 Gew.-%, bezogen auf das Gesamtgewicht von B3, eingesetzt.

### Komponente C

Als Polyarylenethersulfon C1 wurde ein aus wiederkehrender Einheiten I2 aufgebautes Polyarylenethersulfon mit einer Viskositätszahl von 21 ml/g, gemessen in 1 %-iger NMP-Lösung bei 25°C, eingesetzt. Der Gehalt an Cl-Endgruppen betrug 99,8 mol-% bezogen auf die Gesamtheit aller Endgruppen.

Zur Herstellung der Formmassen wurden 120 g der Epoxidverbindung a1-1 und 100 g des Härters a2-1 bei einer Temperatur von 80°C gemischt, bis eine homogene Verteilung vorlag. Danach wurden bei 80°C die Komponenten B1, B2, B3, C1, D und/oder E in den jeweils gewünschten Mengen zugemischt. Anschließend wurden 2,4 g des Härtungsbeschleunigers a3-1 bei ungefähr 40°C unter starkem Rühren zugegeben. Die während des Rührens entstandenen Blasen wurden durch fünfminütiges Evakuieren des Reaktionsgefäßes entfernt. Die jeweiligen Mischungen wurden unmittelbar nach ihrer Herstellung über einen Zeitraum von 24 h bei einer Temperatur von 80°C gehärtet und für einen weiteren Zeitraum von 30 min bei 200°C nachgehärtet.

Die Zusammensetzung der so erhaltenen Formmassen und die Ergebnisse der Prüfungen sind in der Tabelle 1 aufgeführt.

**Tabelle 1:**

| Formmasse | 1 | 2 | 3 | 4 | V1 | V2 | V3 | V4 | V5 | 5 |
|---|---|---|---|---|---|---|---|---|---|---|
| Zusammensetzung [Gew.-%]: | | | | | | | | | | |
| A* | 90 | 85 | 80 | 75 | 90 | 85 | 80 | 75 | 90 | 90 |
| B1 | 10 | 15 | 20 | 25 | - | - | - | - | - | - |
| B2 | - | - | - | - | - | - | - | - | - | 10 |
| B3 | - | - | - | - | - | - | - | - | 10 | - |
| C1 | - | - | - | - | 10 | 15 | 20 | 25 | - | - |

| Eigenschaften: | | | | | | | | | | |
|---|---|---|---|---|---|---|---|---|---|---|
| aₖ | 0,69 | 0,59 | 0,74 | 0,95 | 0,43 | 0,12 | 0,04 | 0,05 | 0,78 | 0,91 |
| [kJ/m²] | | | | | | | | | | |
| Transparenz | ja | ja | ja | ja | nein | nein | nein | nein | nein | ja |

| | | | | | | | | | | |
|---|---|---|---|---|---|---|---|---|---|---|
| Die mit vorangestelltem V benannten Formmassen wurden zum Vergleich angeführt. *: Das Gewicht der Komponente A ist definiert als Summe der Gewichte der Komponenten a1-1, a2-1 und a3-1. | | | | | | | | | | |

Die Versuche belegen, daß die erfindungsgemäßen Formmassen bei vergleichbar guter oder verbesserter Schlagzähigkeit, eine gegenüber den bekannten mit Polyarylenethersulfonen modifizierten Epoxidharzsystemen verbesserte Transparenz aufweisen.

## Patentansprüche

1. Formmassen, enthaltend
A) 40 bis 99 Gew.-% mindestens eines Epoxidharzes,
B) 1 bis 60 Gew.-% mindestens eines Polyarylenethersulfons enthaltend Seiten- oder Endgruppen ausgewählt aus der Gruppe der Carboxyl- und Anhydridgruppen,
C) gegebenenfalls mindestens ein Polyarylenethersulfon, enthaltend im wesentlichen keine Seiten- oder Endgruppen ausgewählt aus der Gruppe der Carboxyl- und Anhydridgruppen,
D) gegebenenfalls mindestens einen Füllstoff,
E) 0 bis 40 Gew.-% eines oder mehrerer unterschiedlicher Zusatzstoffe,
wobei die Gewichtsprozente der Komponenten A bis E zusammen 100% ergeben.

2. Formmassen nach Anspruch 1, worin die Epoxidharze A aus
a1) einer oder mehreren mindestens bifunktionellen Epoxidverbindungen,
und darüber hinaus den optionalen Komponenten
a2) einem oder mehreren Härtern und/oder
a3) einem oder mehreren Härtungsbeschleunigern
erhältlich sind.

3. Formmassen nach Ansprüchen 1 bis 2, worin die Polyarylenethersulfone B
0 bis 100 Mol-% wiederkehrende Einheiten I1 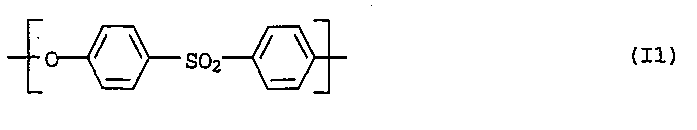 und
0 bis 100 Mol-% wiederkehrende Einheiten I2 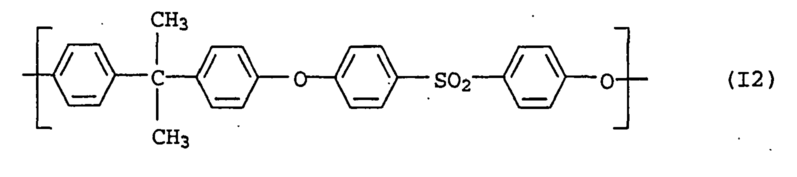 enthalten, wobei die Stoffmengenprozente wiederkehrender Einheiten der Formeln I1 und I2 zusammen 100 Mol-% ergeben und
wobei die Einheiten I1 und I2 zusätzlich 0,1 bis 15 Gew.-%, bezogen auf das Gesamtgewicht von Komponente B, Seiten- oder Endgruppen ausgewählt aus der Gruppe der Carboxyl- und Anhydridgruppen enthalten.

4. Formmassen nach Ansprüchen 1 bis 3, worin die Polyarylenethersulfone C
0 bis 100 Mol-% wiederkehrende Einheiten I1 und
0 bis 100 Mol-% wiederkehrende Einheiten I2 enthalten,
wobei die Stoffmengenprozente wiederkehrender Einheiten der Formeln I1 und I2 zusammen 100 Mol-% ergeben.

5. Verfahren zur Herstellung von Formmassen gemäß den Ansprüchen 1 bis 4, **dadurch gekennzeichnet, daß** in einem ersten Schritt die Komponenten B und gegebenenfalls C, D und/oder E mit den zumindest teilweise noch nicht umgesetzten Komponenten a1 und gegebenenfalls a2 und/oder a3 gemischt werden und in einem zweiten Schritt die vollständige Härtung der Komponenten a1 und gegebenenfalls a2 und/oder a3 erfolgt.

6. Verwendung der Formmassen gemäß den Ansprüchen 1 bis 4 zur Herstellung von Formteilen.

7. Formteile, erhältlich aus den Formmassen gemäß den Ansprüchen 1 bis 4.

## Claims

1. A molding composition comprising
A) from 40 to 99% by weight of at least one epoxy resin,
B) from 1 to 60% by weight of at least one polyarylene ether sulfone comprising side- or end-groups selected from the group consisting of carboxy groups and anhydride groups,
C) if appropriate at least one polyarylene ether sulfone comprising essentially no side or end groups selected from the group consisting of carboxy and anhydride groups,
D) if appropriate at least one filler, and
E) from 0 to 40% by weight of one or more various additives,
where the percentages by weight of components A to E together give 100%.

2. The molding composition according to claim 1, in which the epoxy resin A is obtainable from
a1) one or more at least bifunctional epoxy compounds,
and in addition thereto from the optional components
a2) one or more hardeners, and/or
a3) one or more accelerators.

3. The molding composition according to claim 1 or 2, in which the polyarylene ether sulfones B comprise
from 0 to 100 mol% of repeat units I1 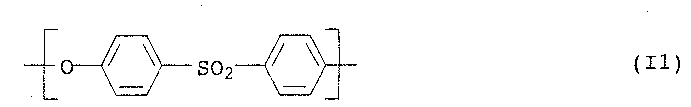 and
from 0 to 100 mol% of repeat units I2 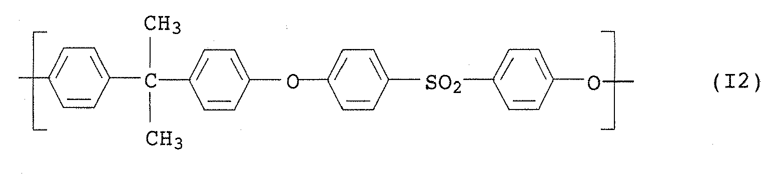 where the molar percentages of repeat units of the formulae I1 and I2 together give 100 mol%, and where the units I1 and I2 also comprise, based on the total weight of component B, from 0.1 to 15% by weight of side- or end-groups selected from the group consisting of carboxy and anhydride groups.

4. The molding composition according to any of claims 1 to 3, in which the polyarylene ether sulfones C comprise
from 0 to 100 mol% of repeat units I1, and
from 0 to 100 mol% of repeat units I2,
where the molar percentages of repeat units of the formulae I1 and I2 together give 100 mol%.

5. A process for preparing molding compositions according to any of claims 1 to 4, which comprises, in a first step, mixing component B and, if appropriate, C, D, and/or E with the as yet still at least partially unreacted components a1 and, if appropriate, a2, and/or a3, and, in a second step, completely hardening components a1 and, if appropriate, a2, and/or a3.

6. The use of the molding compositions according to any of claims 1 to 4 for producing moldings.

7. A molding obtainable from the molding compositions according to any of claims 1 to 4.

## Revendications

1. Masses de moulage contenant
A) 40 à 99 % en poids d'au moins une résine époxy,
B) 1 à 60 % en poids d'au moins une polyarylèneéthersulfone comportant des groupes latéraux ou terminaux choisis parmi le groupe des groupes carboxyle et anhydride,
C) éventuellement au moins une polyarylèneéthersulfone ne contenant essentiellement pas de groupes latéraux ou terminaux choisis parmi le groupe des groupes carboxyle et anhydride,
D) éventuellement au moins une matière de remplissage,
E) 0 à 40 % en poids d'un ou de plusieurs additifs différents,
les pour-cent en poids des composants A à E donnant ensemble 100 %.

2. Masses de moulage suivant la revendication 1, dans lesquelles les résines époxy A peuvent être obtenues à partir
a1) d'un ou de plusieurs composés époxy au moins bifonctionnels,
et en outre des composants éventuels
a2) un ou plusieurs agents de durcissement et/ou
a3) un ou plusieurs accélérateurs de durcissement.

3. Masses de moulage suivant les revendications 1 et 2, dans lesquelles les polyarylèneéthersulfones B contiennent
0 à 100 % molaires d'unités répétitives I1 : 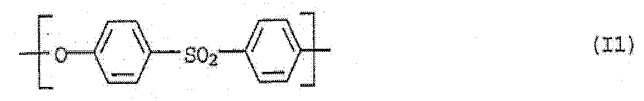 et
0 à 100 % molaires d'unités répétitives I2 : 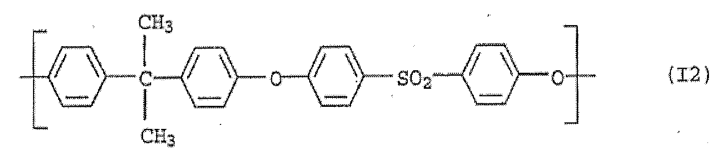 les pour-cent de quantités de matière des unités répétitives des formules I1 et I2 donnant ensemble 100 % molaires, les unités I1 et I2 contenant en supplément 0,1 à 15 % en poids, par rapport au poids total du composant B, de groupes latéraux ou terminaux choisis parmi le groupe des groupes carboxyle et anhydride.

4. Masses de moulage suivant les revendications 1 à 3, dans lesquelles les polyarylèneéthersulfones C contiennent
0 à 100 % molaires d'unités répétitives I1 et
0 à 100 % molaires d'unités répétitives I2,
les pour-cent de quantités de matière des unités répétitives des formules I1 et I2 donnant ensemble 100 % molaires.

5. Procédé de préparation de masses de moulage suivant les revendications 1 à 4, **caractérisé en ce que**, dans une première étape, les composants B et éventuellement C, D et/ou E sont mélangés avec les composants qui au moins partiellement n'ont pas encore réagi a1 et éventuellement a2 et/ou a3 et, dans une deuxième étape, le durcissement complet des composants a1 et éventuellement a2 et/ou a3 a lieu.

6. Utilisation des masses de moulage suivant les revendications 1 à 4, pour la préparation de pièces façonnées.

7. Pièces façonnées, que l'on peut obtenir à partir des masses de moulage suivant les revendications 1 à 4.
